# EUROPÄISCHE PATENTSCHRIFT

(11) **EP 0 585 307 B1**
(45) Veröffentlichungstag und Bekanntmachung des Hinweises auf die Patenterteilung: **05.10.1994**
(21) Anmeldenummer: 92910744.9
(22) Anmeldetag: 23.05.1992
(51) Int. Cl.: F16H 61/16, F16H 59/04

(54) **GANGSCHALTER FÜR ELEKTRISCH GESTEUERTE GETRIEBE**
Shift lever for electrically controlled transmissions
Levièr de commande pour des transmissions commandées électriquement

(30) Priorität: 27.05.1991 DE 4117228
(43) Veröffentlichungstag der Anmeldung: 09.03.1994
(73) Patentinhaber: ZF FRIEDRICHSHAFEN Aktiengesellschaft, 88038 Friedrichshafen (DE)
(72) Erfinder: FREI, Walter, D-7990 Friedrichshafen (DE); HÄRDTLE, Wilhelm, D-7778 Markdorf (DE); SCHWARZ, Günter, D-7990 Friedrichshafen (DE)
(86) Internationale Anmeldenummer: EP9201165
(87) Internationale Veröffentlichungsnummer: WO9221899

(56) Entgegenhaltungen:
- DE-A- 2 336 784
- DE-A- 2 502 578
- DE-A- 3 905 768
- US-A- 4 401 866

## Beschreibung

Die Erfindung betrifft einen Gangschalter für elektrisch gesteuerte Getriebe mit einem in zwei parallelen Ebenen schwenkbaren und in Kulissen, die nur im Bereich einer neutralen Schaltstellung eine Querverbindung aufweisen, geführten Schalthebel. Dieser rastet in der jeweiligen Schaltstellung ein. Er ist ferner an einer Schaltwelle angelenkt, die etwa senkrecht zum Schalthebel drehbar gelagert und mit diesem über ein Gelenk verbunden ist. Wird der Schalthebel in die jeweiligen Schaltstellungen verschwenkt, verdreht er die Schaltwelle, die über eine Schaltwalze mit Nocken Mikroschalter betätigt, die Signale für die Gangschaltung erzeugen. Mit der Schaltwelle ist ferner eine Sperrscheibe verbunden, die durch einen Riegelmagneten in Abhängigkeit ihrer Stellung und einer vorgegebenen, zulässigen Drehzahl verriegelt wird.

Solche Gangschalter werden vorzugsweise in Baufahrzeugen, schweren Nutzkraftfahrzeugen und Omnibussen angewendet. Sie sind bekannt durch die DT 25 02 578 C3. Hierbei sind in der einen Schwenkebene des Schalthebels die Vorwärtsgänge und in der dazu parallelen Schwenkebene die Rückwärtsgänge angeordnet. Bei automatisch schaltenden Getrieben werden zweckmäßigerweise die automatisch schaltenden Fahrstufen in der einen Schwenkebene und die manuell zu schaltenden Gänge in der anderen angeordnet.

Besonders bei Baustellenfahrzeugen ist es erforderlich, daß schnell von einem Gang zum anderen und in die Gegenfahrrichtung geschaltet werden kann. Dabei sollen unzulässige Rückschaltungen und Wendeschaltungen bei zu hoher Fahrgeschwindigkeit vermieden werden.

Der bekannte Gangschalter hat zwar einen Riegelmagneten, der in Abhängigkeit der Schaltstellung und der entsprechend zulässigen Drehzahl aktiviert wird, jedoch erfordert die Ansteuerung des Riegelmagneten einen hohen Regelaufwand, um sicherzustellen, daß der Schaltablauf in den zulässigen Grenzen nicht behindert wird.

Der Erfindung liegt die Aufgabe zugrunde, die Rückschaltsperre eines Gangschalters leichter ansteuerbar zu gestalten, ohne den Schaltungsablauf zu behindern. Sie wird mit der Kombination der Merkmale des ersten Anspruchs gelöst.

Die Erfindung geht davon aus, daß bei Getrieben für Baumaschinen eine Wendeschaltung unterhalb einer im zweiten Gang zulässigen Drehzahl für die Manövrierbarkeit des Fahrzeug wünschenswert und zulässig ist. Bei dem erfindungsgemäßen Fahrschalter wird der Riegelmagnet in diesem Bereich nicht aktiviert, so daß die Wendeschaltung ungehindert durchgeführt werden kann. Liegt die Drehzahl oberhalb der zulässigen Drehzahl für den zweiten Gang, ist der Riegelmagnet aktiviert und gelangt an einen Anschlag der Sperrscheibe, sobald sich diese in einer Stellung befindet, die der Schaltstellung für den ersten Gang entspricht. Solange der Riegelmagnet aktiviert ist, kann nicht in die Neutralstellung geschaltet werden und somit keine Wendeschaltung durchgeführt werden. Die so gestaltete Reversiersperre wird sowohl bei einer Schaltung von vorwärts auf rückwärts als auch in der Richtung von rückwärts auf vorwärts wirksam.

Da der Riegelmagnet zwar oberhalb der im zweiten Gang zulässigen Drehzahl stets aktiviert ist, die Sperrscheibe in den Stellungen, die den Schaltstellungen für die höheren Gänge entspricht, keine Anschläge oder Rasten für den Riegelmagneten aufweist, ist die Reversiersperre in diesen Schaltstellungen wirkungslos. Um unbeabsichtigte Rückschaltungen über mehreren Gängen zu vermeiden, ist in diesen Bereichen für Vorwärts- und Rückwärtsfahrt ein elektrisch mechanisches Schrittschaltwerk wirksam, das mit einem zeitlich gesteuerten Sperrmagneten an der Sperrscheibe angreift und nur Schaltungen von Gang zu Gang zuläßt. Solche Schrittschaltwerke sind an sich für Gangschalter bekannt, DT 23 36 784 A1. Durch die zwei voneinander unabhängigen Verriegelungssysteme ist der Regelaufwand sehr gering.

Um Schäden an der Sperreinrichtung durch unsachgemäße Bedienung zu vermeiden, ist ein Schaltknopf über einen Gummipuffer am Schalthebel befestigt. Durch die Anordnung des Gummipuffers zwischen Schaltknopf und Schalthebel wird der Schaltstoß gegen die Sperreinrichtungen bei unsachgemäßer Bedienung nachgiebig gedämpft, ohne daß der Gummipuffer im übrigen die Leichtgängigkeit des Gangschalters und die Größe der erforderlichen Rastkräfte des Schalthebels ungünstig beeinflußt.

In der Zeichnung ist ein Ausführungsbeispiel der Erfindung dargestellt.

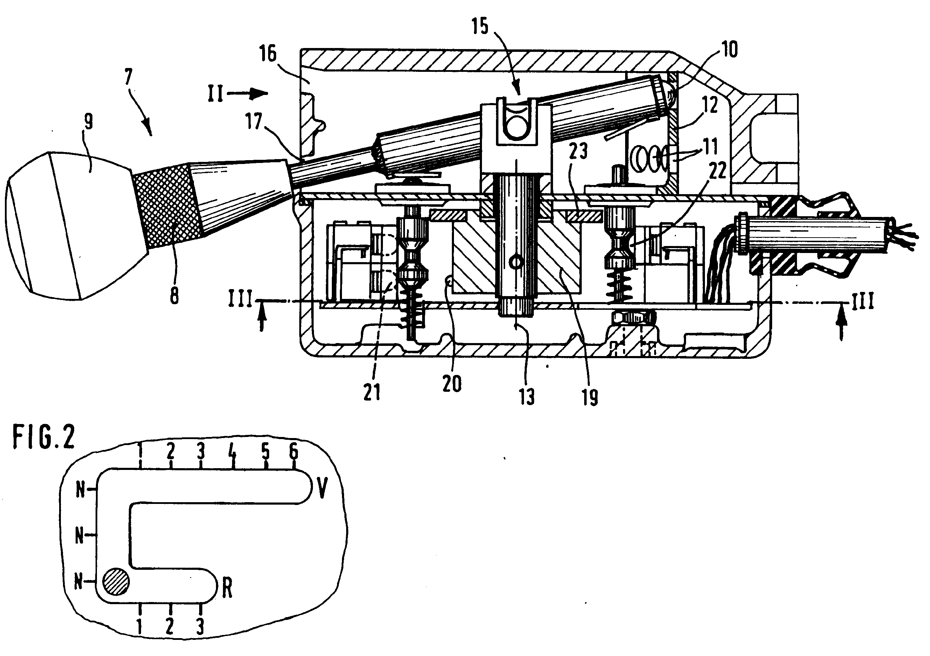

- Fig. 1: zeigt einen Längsschnitt durch einen Gangschalter,
- Fig. 2: zeigt Kulissen, in denen ein Schalthebel des Gangschalters geführt ist,
- Fig. 3: zeigt einen Schnitt entsprechend der Linie AA in Fig. 1.

Der Gangschalter hat einen Schalthebel 7, der über einen Gummipuffer 8 mit einem Schaltknopf 9 fest verbunden ist. Am anderen Ende des Schalthebels 7 befindet sich eine Rastkugel 10, die in den jeweiligen Schaltstellungen 1 - 6, N in entsprechende Aussparungen 11 eines Rastbleches 12 einrastet. Der Schalthebel 7 ist quer zu einer Drehachse 13 einer Schaltwelle 14 durch ein Gelenk 15 schwenkbar gelagert.

Der Schalthebel 7 ist in zwei parallelen Kulissen 16 und 17 geführt, wobei die Kulisse 16 den Vorwärtsgängen V 1 bis 6 und die Kulisse 17 den Rückwärtsgängen R 1 bis 3 zugeordnet ist. Die Kulissen 16 und 17 haben in der Neutralstellung N des Schalthebels 7 eine Querverbindung 18. Bei der Bewegung des Schalthebels 7 in den Kulissen 16 oder 17 wird die Schaltwelle 14 und eine mit ihr verbundene Schaltwalze 19 gedreht. Diese hat am Umfang Nocken 20, die entsprechend der Stellung des Schalthebels 7 die nicht näher dargestellten Mikroschalter für die einzelnen Gänge schalten. Die Drehrichtungsumkehr des Getriebes wird durch zwei Schalter 21 und 22 durchgeführt, die vom Schalthebel 7 beim Wechsel von einer Kulisse in die andere über die Querverbindung 18 wechselweise betätigt werden.

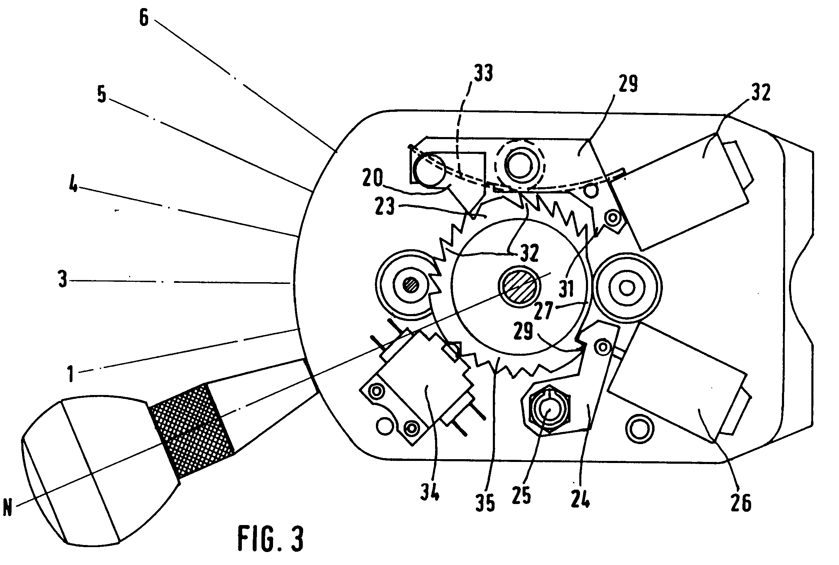

Mit der Schaltwalze 19 und damit mit der Schaltwelle 14 ist eine Sperrscheibe 23 fest verbunden. Die Gestalt der Sperrscheibe 23 und die auf sie einwirkenden Teile sind aus Fig. 3 ersichtlich. Zu diesen gehört eine Sperrklinke 24, die um eine zur Drehachse 13 parallelen Drehachse 25 schwenkbar gelagert ist und von einem Riegelmagneten 26 im aktivierten Zustand gegen eine Rastbahn 27 am Umfang der Sperrscheibe 23 gedrückt wird. Am Ende der Rastbahn 27 befindet sich in Richtung auf die Neutralstellung N hin ein Anschlag 28, der verhindert, daß der Schalthebel 7 in die Neutralstellung N geschaltet werden kann, wenn der Riegelmagnet 26 oberhalb einer für den zweiten Gang zulässigen Drehzahl aktiviert ist. Ist der Riegelmagnet 26 nicht aktiviert, hebt die Sperrklinke von der Rastbahn 27 ab, und es kann in die Neutralstellung N geschaltet werden. In dieser Stellung ist eine Umschaltung von vorwärts auf rückwärts möglich.

An der Sperrscheibe 23 greift ferner ein elektrisch-mechanisches Schrittschaltwerk an, das einen zweiarmigen Kipphebel 29 mit Sperrzähnen 30 und 31 und einen Sperrmagneten 32 umfaßt. Die Sperrzähne 30 und 31 greifen wechselweise in eine Sperrverzahnung 32 an der Sperrscheibe 23 ein, wobei der Sperrzahn 30 durch eine Schenkelfeder 33 in Richtung Sperrverzahnung 27 und der Sperrzahn 31 durch den Sperrmagneten 32 in Richtung Sperrverzahnung 27 beaufschlagt werden. Der Sperrmagnet 32 wird über Zeitglieder, die nicht näher dargestellt sind, kurzzeitig bei jedem Gangwechsel aktiviert, so daß nur von Gang zu Gang geschaltet werden kann. Die Impulse für die Aktivierung werden von einem Mikroschalter 34 erzeugt, der von Nocken 35 an der Sperrscheibe 23 betätigt wird.

Bei dem erfindungsgemäßen Gangschalter kann, vom zweiten Gang aufwärts nur schrittweise geschaltet werden, während die Schaltung in die Neutralstellung und damit der Wechsel der Fahrtrichtung nur unterhalb einer bestimmten Drehzahl möglich ist.

### Bezugszeichen

- 1 - 6: Schaltstellungen
- 7: Schalthebel
- 8: Gummipuffer
- 9: Schaltknopf
- 10: Rastkugel
- 11: Aussparung
- 12: Rastblech
- 13: Drehachse
- 14: Schaltwelle
- 15: Gelenk
- 16: Kulisse
- 17: Kulisse
- 18: Querverbindung
- 19: Schaltwalze
- 20: Nocken
- 21: Schalter
- 22: Schalter
- 23: Sperrscheibe
- 24: Sperrklinke
- 25: Drehachse
- 26: Riegelmagnet
- 27: Rastbahn
- 28: Anschlag
- 29: Kipphebel
- 30: Sperrzahn
- 31: Sperrzahn
- 32: Sperrmagnet
- 32: Sperrverzahnung
- 33: Schenkelfeder
- 34: Mikroschalter
- 35: Nocken
- N: Neutralstellung
- R: Fahrtrichtung rückwärts
- V: Fahrtrichtung vorwärts

## Patentansprüche

1. Gangschalter für elektrisch gesteuerte Getriebe mit einem in zwei parallelen Ebenen schwenkbaren und in Kulissen (16, 17), die nur im Bereich einer neutralen Schaltstellung (N) eine Querverbindung (18) aufweisen, geführten Schalthebel (7), der in der jeweiligen Schaltstellung (1 - 6, N) einrastet und an einer Schaltwelle (14) angelenkt ist, die etwa senkrecht zum Schalthebel (7) drehbar gelagert und mit diesem drehfest über ein Gelenk (15) verbunden ist und sowohl eine Schaltwalze (19) zur Betätigung von Mikroschaltern als auch eine Sperrscheibe (23) hat, die durch einen Riegelmagneten (26) in Abhängigkeit ihrer Stellung und einer vorgegebenen, zulässigen Drehzahl verriegelt wird,
dadurch **gekennzeichnet**, daß
- der Riegelmagnet (26) oberhalb einer im zweiten Gang zulässigen Drehzahl immer aktiviert ist und nur dann
- mit einem Anschlag (28) an der Sperrscheibe (23) zusammenwirkt, sobald diese sich in einer Stellung befindet, die der Schaltstellung (1) für den ersten Gang entspricht.

2. Gangschalter nach Anspruch 1, dadurch **gekennzeichnet**, daß an der Sperrscheibe (23) ein elektrisch mechanisches Schrittschaltwerk (29 - 35) mit einem zeitlich gesteuerten Sperrmagneten (32) angreift, das nur für Schaltungen von höheren Gängen als den ersten wirksam ist.

3. Gangschalter nach Anspruch 1 oder 2, dadurch **gekennzeichnet**, daß ein Schaltknopf (9) über einen Gummipuffer (8) am Schalthebel (7) befestigt ist.

## Claims

1. A gearshift device for electrically controlled gearboxes has a shifting lever (7) capable of pivoting in two parallel planes and guided in slides (16, 17) that are provided with a cross link (18) only in the area of the neutral shifting position (N), whereby the said gearshift device engages in the specific shift position (1 - 6, N) and is linked to a shifting shaft (14) which is mounted in a rotating arrangement and describes approximately a right angle with the shifting lever (7), and is also attached to the shifting lever (7) by means of a joint (15) in an arrangement which does not permit rotation; the shifting shaft (14) has a shifting roller (19) for actuating microswitches as well as a blocking disc (23) which is blocked by a blocking solenoid (26) in accordance with its position and a specified permissible speed of rotation, **characterized** in that,
- the blocking solenoid (26) is always activated at a speed of rotation above a specific level in second gear, and only acts in conjunction with
- a stop (28) on the blocking disc (23) when the blocking disc (23) is in a position which corresponds to the shift position (1) for first gear.

2. A gearshift device in accordance with Claim 1,
**characterized** in that, an electromechanical stepping switchgear element (29 - 35) with an additional controlled blocking solenoid (32) acts on the blocking disc (23), whereby the stepping switchgear element (29 - 35) is only effective during shifts from gears higher than the first gear.

3. A gearshift device in accordance with Claim 1 or Claim 2, **characterized** in that,
a shifting button (9) is attached to the shifting lever (7) via a rubber pad (8).

## Revendications

1. Sélecteur de vitesse pour boîtes à pilotage électrique avec un levier de changement de vitesses (7) orientable dans deux plans parallèles et guidé dans des coulisses (16, 17) ne présentant une liaison transversale (18) que dans la zone d'une position de commutation neutre (N), lequel levier de changement de vitesses (7) s'enclenche dans la position de commutation (1 - 6, N) correspondante et est articulé sur un arbre de commande (14) qui est logé de façon rotative et pratiquement verticale par rapport au levier de changement de vitesses (7) et relié avec ce dernier par une articulation (15) de manière à en être solidaire en rotation et ayant à la fois un combinateur à cames (19) pour l'actionnement de microcommutateurs et un disque de verrouillage (23), lequel est verrouillé par un verrou électro-magnétique (26) en fonction de sa position et d'un régime admissible déterminé,
**caractérisé** en ce que
- le verrou électro-magnétique (26) est toujours activé au-delà d'un régime admissible en deuxième vitesse et que c'est seulement alors qu'il
- agit de façon combinée avec une butée (28) sur le disque de verrouillage (23) dès que celui-ci se trouve dans une position correspondant à la position de passage (1) de la première vitesse.

2. Sélecteur de vitesse selon la revendication 1,
**caractérisé** en ce que, sur le disque de verrouillage (23), un mécanisme de manoeuvre graduel (29 - 35) mécanique électrique engrène avec un électro-aimant de verrouillage commandé de façon temporaire (32) fonctionnant en premier uniquement pour les passages des rapports supérieurs.

3. Sélecteur de vitesse selon la revendication 1 ou 2,
**caractérisé** en ce que un bouton de commande (9) est fixé sur le levier de changement de vitesses (7) par un butoir en caoutchouc (8).
